# EUROPÄISCHE PATENTSCHRIFT

(11) **EP 1 409 621 B1**
(45) Veröffentlichungstag und Bekanntmachung des Hinweises auf die Patenterteilung: **30.11.2005**
(21) Anmeldenummer: 02784845.6
(22) Anmeldetag: 06.07.2002
(51) Int. Cl.: C11B 9/00, A23L 1/226

(54) **8-TETRADECENAL ALS DUFT- ODER AROMASTOFF**
8-TETRADECENAL SERVING AS AN ODOROUS OR AROMATIC SUBSTANCE
8-TETRADECENAL COMME SUBSTANCE ODORIFERANTE OU AROMATIQUE

(30) Priorität: 11.07.2001 DE 10133541
(43) Veröffentlichungstag der Anmeldung: 21.04.2004
(73) Patentinhaber: Symrise GmbH & Co. KG, 37603 Holzminden (DE)
(72) Erfinder: WIDDER, Sabine, 37603 Holzminden (DE); WEBER, Berthold, 37603 Holzminden (DE); EGGERS, Marcus, 37627 Stadtoldendorf (DE); LOOFT, Jan, 37603 Holzminden (DE); VÖSSING, Tobias, 37688 Beverungen (DE); PICKENHAGEN, Wilhelm, 37671 Höxter (DE)
(74) Vertreter: Stilkenböhmer, Uwe Michael
(86) Internationale Anmeldenummer: PCT/EP2002/007547
(87) Internationale Veröffentlichungsnummer: WO 2003/006591

(56) Entgegenhaltungen:
- EP-A- 0 148 648
- US-A- 3 920 752
- US-A- 5 650 160
- DATABASE CA [Online] CHEMICAL ABSTRACTS SERVICE, COLUMBUS, OHIO, US; CADWALLADER, K. R. ET AL: "Character-impact aroma components of coriander (Coriandrum sativum) herb" retrieved from STN Database accession no. 133:119221 XP002218144 in der Anmeldung erwähnt & FLAVOR AND CHEMISTRY OF ETHNIC FOODS, [PROCEEDINGS OF A MEETING HELD DURING THE 5TH CHEMICAL CONGRESS OF NORTH AMERICA], CANCUN, NOV. 11-15, 1997 (1999), MEETING DATE 1997, 77-84. EDITOR(S): SHAHIDI, FEREIDOON;HO, CHI-TANG. PUBLISHER: KLUWER ACADEMIC,
- DATABASE CA [Online] CHEMICAL ABSTRACTS SERVICE, COLUMBUS, OHIO, US; BASER, K. H. C. ET AL: "The essential oil of Bifora radians Bieb" retrieved from STN Database accession no. 129:280733 XP002218145 & JOURNAL OF ESSENTIAL OIL RESEARCH (1998), 10(4), 451-452 ,
- ARCTANDER S. : "PERFUME AND FLAVOR CHEMICALS (AROMA CHEMICALS). " 1992 , MONCLAIR, S. ARCTANDER , US XP002218143 Beispiel 3036
- A.J. MACLEOD: "Volatile flavour components of coriander leaf" JOURNAL OF THE SCIENCE OF FOOD AND AGRICULTURE. , Bd. 27, 1976, Seiten 721-725, XP002218142 ELSEVIER APPLIED SCIENCE PUBLISHERS. BARKING.; GB
- DATABASE CA [Online] CHEMICAL ABSTRACTS SERVICE, COLUMBUS, OHIO, US; BOELENS, MANS H. ET AL: "Organoleptic properties of aliphatic aldehydes" retrieved from STN Database accession no. 108:72902 XP002218146 in der Anmeldung erwähnt & PERFUM. FLAVOR. (1987), 12(5), 31-7, 40, 43 ,
- DATABASE CA [Online] CHEMICAL ABSTRACTS SERVICE, COLUMBUS, OHIO, US; MARQUES, FRANCISCO DE A. ET AL: "Kovats retention indexes of monounsaturated C12, C14, and C16 alcohols, acetates and aldehydes commonly found in lepidopteran pheromone blends" retrieved from STN Database accession no. 134:233777 XP002218147 in der Anmeldung erwähnt & JOURNAL OF THE BRAZILIAN CHEMICAL SOCIETY (2000), 11(6), 592-599 ,
- DATABASE CA [Online] CHEMICAL ABSTRACTS SERVICE, COLUMBUS, OHIO, US; KOUTEK, BOHUMIR ET AL: "Gas chromatographic determination of vapor pressures of pheromone-like compounds. III. Aldehydes" retrieved from STN Database accession no. 124:197368 XP002218148 in der Anmeldung erwähnt & JOURNAL OF CHROMATOGRAPHY, A (1996), 719(2), 391-400 ,
- DATABASE CA [Online] CHEMICAL ABSTRACTS SERVICE, COLUMBUS, OHIO, US; MO, W.-P. ET AL: "Mammalian exocrine secretions: IX. Constituents of preorbital secretion of oribi, Ourebia ourebi" retrieved from STN Database accession no. 123:247570 XP002218149 in der Anmeldung erwähnt & JOURNAL OF CHEMICAL ECOLOGY (1995), 21(8), 1191-215 ,

## Beschreibung

Die Erfindung betrifft die Verwendung von (Z)-8-Tetradecenal, (E)-8-Tetradecenal oder einem Gemisch aus (Z)-8- und (E)-8-Tetradecenal als Duftstoff (Riechstoff) oder Aromastoff (Geschmacksstoff).

Die Erfindung betrifft ferner ein entsprechendes Verfahren zur Vermittlung oder Verstärkung eines Citrusduftes oder Citrusaromas einer Grundkomposition, ein Verfahren zum Modifizieren einer Duftstoff- und Aromakomposition sowie entsprechende Aromakompositionen selbst.

In der parfümistischen und flavoristischen Praxis besteht generell ein beständiger Bedarf an synthetischen Duft- und Aromastoffen, die sich günstig und mit gleichbleibender Qualität herstellen lassen, bei längerer Lagerung möglichst auch im Kontakt mit anderen Stoffen stabil bleiben und erwünschte olfaktorische bzw. geschmackliche Eigenschaften haben. Duftstoffe sollen angenehme, möglichst natumahe Duftnoten von ausreichender Intensität aufweisen und in der Lage sein, den Duft von kosmetischen oder technischen Konsumgütern vorteilhaft zu beeinflussen. Aromastoffe sollen gut verträglich sein, an typische Geschmackskomponenten beliebter Speisen erinnern oder sogar mit diesen identisch sein und dazu beitragen können, den Geschmack von Lebensmitteln, oral zu verabreichenden Medikamenten und dergleichen positiv zu beeinflussen. Das Auffinden von Duft- und Aromastoffen, die diesen Anforderungen entsprechen, hat sich als verhältnismäßig aufwendig erwiesen und erfordert regelmäßig umfangreiche Untersuchungen, insbesondere, wenn interessante neuartige Duftnoten oder Geschmacksrichtungen angestrebt werden.

Die Suche nach geeigneten Duft- oder Aromastoffen wird für den Fachmann insbesondere durch folgende Sachverhalte erschwert:
- Die Mechanismen der Duft- bzw. Aromawahmehmung sind nicht bekannt.
- Eine objektiv-quantitative Charakterisierung eines Duftes oder Aromas ist nicht möglich.
- Die Zusammenhänge zwischen der Duft- und/oder Aromawahrnehmung einerseits und der chemischen Struktur des Duft- und/oder Aromastoffs andererseits sind nicht hinreichend erforscht.
- Häufig bewirken bereits geringfügige Änderungen am strukturellen Aufbau bekannter Duft- oder Aromastoffe starke Änderungen der olfaktorischen bzw. geschmacklichen Eigenschaften und beeinträchtigen die Verträglichkeit für den menschlichen Organismus.

Der Erfolg der Suche nach geeigneten Duft- oder Aromastoffen hängt dehalb regelmäßig von der Intuition des Suchenden ab.

Der vorliegenden Erfindung liegt die Aufgabe zugrunde, unter Beachtung der vorstehend beschriebenen generellen Rahmenbedingungen einen Duft- und Aromastoff anzugeben, welcher insbesondere in der Lage ist, üblichen Duftstoff- oder Aroma-Grundkompositionen einen frischen Citrusduft zu vermitteln oder den vorhandenen Citrusduft derartiger Kompositionen in vorteilhafter Weise zu modifizieren, d.h. insbesondere aufzufrischen, saftiger und authentischer erscheinen zu lassen sowie der gesamten Komposition Körper und Fülle zu geben.

Die anzugebenden Substanzen sollten insbesondere die sensorischen Eigenschaften von Citrusfrucht-Kompositionen vorteilhaft beeinflussen können, d.h. von Kompositionen, die den Konsumenten an beispielsweise Bitterorange, Limette, Pampelmuse, Mandarine, Clementine, Limone, Cedral-Zitrone, Apfelsine, Kumquat oder dergleichen erinnern und/oder Citrusöle umfassen.

Die anzugebenden Substanzen sollten dem Parfümeur oder Flavoristen beim Komponieren von Duftstoffen oder Aromen eine vielseitig einsetzbare Alternative zu den bislang eingesetzten oder beschriebenen Citrus-Duftstoffen oder -Aromen bieten. Beim schöpferischen Vorgang des Komponierens, einem langwierigen Prozess, der in der Regel nur von Spezialisten durchgeführt wird, genügt es zum Erreichen eines in der Vorstellung bereits existierenden Duft- oder Aromabildes nämlich nicht, schablonenartig einen beliebigen Duft- oder Aromastoff einzusetzen, dem in der Literatur ein bestimmter Geruchs- oder Aromaaspekt zugeordnet wurde. Die Geruchs- oder Aromacharakteristik einer Komposition lässt sich nämlich nicht im Sinne einer Addition präzise vorhersagen, wenn nur die Bestandteile der Komposition bekannt sind; denn diese Bestandteile unterliegen im Gemisch unvorhersehbaren Wechselwirkungen. Wichtig ist deshalb auch die Kompatibilität eines Duft- oder Aromastoffs mit den weiteren Bestandteilen einer Komposition und das Vorhandensein oder Fehlen von begleitenden sensorisch wahrnehmbaren Aspekten, die den Gesamtcharakter der fertigen Komposition mitbeeinflussen, ohne dass sie vielleicht in der Geruchsbeschreibung der reinen Substanz eine besondere Würdigung erfahren.

Die Erfindung beruht auf der überraschenden Erkenntnis, dass insbesondere (Z)-8-Tetradecenal, in etwas abgeschwächtem Maße jedoch auch (E)-8-Tetradecenal, sowie Gemische aus (Z)-8- und (E)-8-Tetradecenal zur Verwendung als Duft- und Aromastoff sowie zur Lösung der vorstehend angegebenen Aufgaben hervorragend geeignet sind.

(Z)-8-Tetradecenal besitzt einen besonders niedrigen Geruchsschwellenwert von nur 0,009 ppb (Geruchsschwellenwert in Wasser), so dass bereits geringe Mengen dieser Substanz eine sensorisch wahmehmbare Modifizierung einer Duftstoff- oder Aroma-(Grund-)Komposition bewirken. Die Geruchsschwelle von (E)-8-Tetradecenal liegt nach eigenen Untersuchungen zwar lediglich bei 1,24 ppb, doch ist seine Einsetzbarkeit in Duftstoff- und Aromastoffkompositionen noch immer hervorragend, und zwar insbesondere im Gemisch mit dem (aktiveren) (Z)-8-Tetradecenal.

Die strukturchemisch eng mit dem erfindungsgemäßen (Z)-8-Tetradecenal verwandten und im Unterschied zu diesem kommerziell verfügbaren Substanzen (Z)-7-Tetradecenal und (Z)-9-Tetradecenal besitzen übrigens im Vergleich mit (Z)-8-Tetradecenal keine brauchbaren sensorischen Eigenschaften. Insbesondere liegt Ihre Geruchsschwelle überraschenderweise um etwa 2 Größenordnungen. über der des (Z)-8-Tetradecenal, vgl. dazu die Beispiele weiter unten.

Die Substanzen (Z)-8- und (E)-8-Tetradecenal sind bereits bekannt, und es sei insoweit insbesondere auf folgende Literaturstellen verwiesen:
1. Koväts Retention Indexes of Monounsaturated C12, C14 and C16 Alcohols, Acetates and Aldehydes Commonly Found in Lepidopteran Pheromone Blends (Francisco de A. Marques, J.S. McElfresh, Jocelyn G. Millar; J. Braz. Chem. Soc. (2000), 11 (6), 592-599).
2. Gas chromatographic determination of vapour pressures of pheromonelike compounds III. Aldehydes (Bohumir Koutek, Michal Hoskovec, Pavlina Vrkocovä, Karel Knecny, Ladistav Feltl, Jan Vrkoc; J. Chromatogr., A (1996), 719 (2), 391-400).
3. Mammalian Exocrine Secretions: IX. Constituents of Preorbital Secretion of Oribi, Ourebia, ourebi (W.-P. Mo, B.V. Burger, M. LeRoux, H.S.C. Spies; Chem. Ecol. (1995), 21(8), 1191-215).

Die sensorischen Eigenschaften von (Z)-8- und (E)-8-Tetradecenal wurden jedoch bislang nicht untersucht; die vorstehend genannten Schriften betreffen Probleme der Strukturaufklärung im Zusammenhang mit der Untersuchung von Pheromonen.

Auch Veröffentlichungen zu den organoleptischen oder sensorischen Eigenschaften aliphatischer Aldehyde, zu denen die erfindungsgemäßen Substanzen ja gehören, gaben keinen Hinweis auf die besonderen Eigenschaften von (Z)-8-Tetradecenal und (E)-8-Tetradecenal.

Aus einem Artikel zu "Character-impact aroma components of coriander (Coriandrum sativum I.) herb", Cadwallader, K.R.; Surakamkul, R.; Yang, S.-P.; Webb, T.E. Flavor Chem. Ethn. Foods, [Proc. Meet. 5^{th} Chem. Cong. North Am.] (1999), Meeting Date 1997, 77-84. Editor(s): Shahidi, Fereidoon; Ho, Chi-Tang: Publisher: Kluwer Academic/Plenum Publishers, New York, N.Y., werden flüchtige Komponenten von Cilantro (Koriander-Pflanzen) beschrieben, unter denen sich auch eine Reihe von aliphatischen Aldehyden befinden. In einer Tabelle 1 werden untersuchte Verbindungen unter Angabe einer Geruchsbeschreibung angegeben. Von den untersuchten Alkenalen ist jedoch nur einer Verbindung ein citrusartiger Geruch zugeordnet, nämlich der vergleichsweise kurzkettigen Verbindung (E)-4-Decenal ein "citruspeel"-Geruch, der allerdings intensitätsmäßig hinter einem grünen Geruch zurücksteht. Der Geruch des die gleiche Kettenlänge wie die erfindungsgemäßen Verbindungen besitzenden (E)-2-Tetradecenal, der allerdings eine zur Carbonylgruppe konjugierte Doppelbindung enthält und insoweit chemisch nicht mit den erfinungsgemäßen Verbindungen vergleichbar ist, wird hingegen lediglich als "fatty, waxy, cheesy" angegeben; und auch die anderen untersuchten Alkenale umfassen keinen Citrus-Geruchsaspekt.

In einem Artikel zu "Organoleptic properties of aliphatic aldehydes", Boelens, Mans H.; Van Gemert, Leo J.; Perfum. Flavor. (1987), 12(5), 31-7, 40, 43, werden subjektiv quantifizierte organoleptische Eigenschaften von Aldehyden zusammengefasst. Die untersuchten Aldehyde wurden dabei auch subjektiv hinsichtlich ihres Citrus-Charakters bewertet, und es ist festzustellen, dass die bereits aus der zuvor diskutierten Literaturstelle bekannte Verbindung (E)-2-Tetradecenal nach Ansicht der untersuchenden Parfümeure und Flavoristen einen schwachen Citrusaspekt umfasst, der allerdings hinter einem starken fettigen Aspekt deutlich zurücksteht. Ganz ähnlich ist die Situation bei den weiteren untersuchten einfach ungesättigten Aldehyden, und zwar insbesondere bei den Aldehyden mit unkonjugierter Doppelbindung. Wenn diese überhaupt einen Citrusaspekt umfassen (was in den meisten Fällen nicht der Fall ist), wird dieser von den grünen, fettigen und/oder blumigen Geruchsaspekten überdeckt. Lediglich den jeweils eine konjugierte Doppelbindung umfassenden Substanzen trans-2-Octenal, trans-2-Decenal und trans-2-Undecenal (insbesondere in verdünnter Form) wurde ein nennenswerter Citrus-Aspekt zugeordnet. Aber diese Substanzen sind den erfindungsgemößen Verbindungen chemisch aufgrund Ihrer abweichenden Kettenlänge und der Konjugation der Doppelbindungen nicht mehr sonderlich ähnlich, so dass der Fachmann aus ihren sensorischen Eigenschaften nichts für die erfindungsgemäßen Substanzen ableiten konnte. Die genannten trans-2-Alkenale wurden in eigenen Performance-Vergleichstests überdies von den erfindungsgemäßen Substanzen (mit unkonjugierter Doppelbindung) deutlich übertroffen. Weiterhin verleihen die erfindungsgemäßen Substanzen im Gegensatz zu den genannten trans-2-Alkenalen den Duft- bzw. Aromakompositionen Körper und Fülle. Die durch die erfindungsgemäßen Substanzen erzielten Modifikationen können somit durch die genannten trans-2-Alkenale nicht erreicht werden.

Unter einem geringfügig anderen Blickwinkel betrachtet, stellt die vorliegende Erfindung ein Verfahren zur Vermittlung oder Verstärkung eines Citrusduftes oder Citrusaromas einer Grundkomposition zur Verfügung, welches dadurch gekennzeichnet ist, dass
(a) eine sensorisch wirksame Menge an (Z)-8-Tetradecenal, (E)-8-Tetradecenal oder einem Gemisch aus (Z)-8- und (E)-8-Tetradecenal und
(b) Bestandteile der Grundkomposition vermischt werden.

Die Grundkomposition kann dabei komplett vorgelegt oder die unter (a) aufgeführte erfindungsgemäße Substanz in beliebiger Reihenfolge mit den vorgegebenen Bestandteilen der Grundkomposition vermischt werden.

Die Erfindung betrifft auch ein Verfahren zum Modifizieren einer (stofflich oder hinsichtlich Ihrer Zusammensetzung vorgegebenen) Duftstoff- oder Aromakomposition, wobei zu der Duftstoff- oder Aromakomposition eine den Duft oder das Aroma modifizierende Menge an (Z)-8-Tetradecenal, (E)-8-Tetradecenal oder einem Gemisch aus (Z)-8- und (E)-8-Tetradecenal zugesetzt wird.

Die zu modifizierende Duftstoff- oder Aromakomposition kann dabei komplett vorgelegt oder die erfindungsgemäße Substanz in beliebiger Reihenfolge mit den vorgegebenen Bestandteilen der Duftstoff- oder Aromakomposition vermischt werden. Nach dem Vorgesagten ist klar, dass die Modifikation in der Regel hinsichtlich des Citrus-Aspekts vorgenommen wird, es ist aber auch möglich, bestimmte Citrus-Duftstoff- oder -Aromakompositionen durch Zusatz der erfindungsgemäßen Substanzen frischer, saftiger, voller und/oder typischer erscheinen zu lassen, ohne den primären Citrus-Aspekt in nennenwerter Weise zu beeinflussen.

Die vorliegende Erfindung betrifft zudem eine Duftstoff- oder Aromakomposition, die eine sensorisch aktive Menge an (Z)-8-Tetradecenal, (E)-8-Tetradecenal oder einem Gemisch aus (Z)-8- und (E)-8-Tetradecenal umfasst. Bei der Duftstoff- oder Aromakomposition handelt es sich vorzugsweise um eine Citrus-Komposition, wobei der Begriff Citrus insbesondere Bitterorange, Limette, Pampelmuse, Mandarine, Clementine, Limone, Cedral-Zitrone, Apfelsine (Orange) und Kumquat umfasst.

Besonders bevorzugt sind erfindungsgemäße Kompositionen, die einen Anteil von 0,001 bis 1 Gew.%, vorzugsweise 0,001 bis 0,1 Gew.-%, (Z)-8-Tetradecenal umfassen, bezogen auf die Gesamtmasse der Komposition. Überraschenderweise genügt nämlich bereits ein Anteil von nur 0,001 Gew.-% (Z)-8-Tetradecenal, um ein übliches Orangenaroma frischer, saftiger, typischer und harmonischer zu machen. Bei der erfindungsgemäßen Verwendung und den erfindungsgemäßen Verfahren werden dementsprechend vorteilhafterweise die genannten Anteile an (Z)-8-Tetradecenal eingestellt.

Die vorliegende Erfindung betrifft schließlich auch einen Artikel, nämlich (a) ein Körperpflegeprodukt oder ein Reinigungsmittel oder (b) ein Nahrungsmittel (inklusive zum Verzehr geeigneter Getränke), das einen Anteil von 0,0001 bis 1 Gew.%, vorzugsweise 0,01 bis 0,1 Gew.-% einer Duftstoff- oder Aromakomposition umfasst, bezogen auf die Gesamtmasse des Artikels. In der Duftstoff- oder Aromakomposition liegt der Anteil on (Z)-8-Tetradecenal im Bereich von 0,001 bis 0,1 Gew.- %, bezogen auf die Gesamtmasse der Komposition.

Ein solcher Artikel umfasst vorzugsweise einen Anteil von 1 ppb bis 100 ppm (Z)-8-Tetradecenal, bezogen auf die Gesamtmasse des Artikels.

Die Erfindung wird nachfolgend anhand von Beispielen näher erläutert.

### Beispiel 1: Bestimmung der Geruchsschwellenwerte von (Z)-8-und (E)-8-Tetradecenal sowie von Vergleichssubstanzen:

Auf übliche Weise wurden für (Z)-8-und (E)-8-Tetradecenal sowie zwei Vergleichssubstanzen die Geruchsschwellenwerte in Wasser bestimmt. Die Ergebnisse sind in Tabelle 1 zusammengefasst:

**Tabelle 1**

| Substanz | Geruchsschwellenwert [ppb] |
|---|---|
| 7-(Z)-Tetradecenal | 2,60 ppb |
| 8-(Z)-Tetradecenal | 0,009 ppb |
| 8-(E)-Tetradecenal | 1,24 ppb |
| 9-(Z)-Tetradecenal | 1,44 ppb |

Man erkennt, dass (Z)-8-Tetradecenal einen um etwa 2 Größenordnungen niedrigeren Geruchsschwellenwert besitzt als die strukturell verwandten Substanzen (Z)-7-Tetradecenal und (Z)-9-Tetradecenal.

### Beispiel 2: Geruchsbeschreibungen für (Z)-8-und (E)-8-Tetradecenal

Auf übliche Weise wurden die erfindungsgemäßen Substanzen (Z)-8-und (E)-8-Tetradecenal von einem Experten-Panel von Flavoristen untersucht. Die Experten beurteilten die jeweiligen Gerüche in Anlehnung an die Vorgehensweise in dem bereits zitierten Artikel "Organoleptic properties of aliphatic aldehydes", Boelens, Mans H.; Van Gernert, Leo J.; Perfum. Flavor. (1987), 12(5), 31-7, 40, 43, d.h. sie quantifizierten die Gerüche der jeweiligen Substanz anhand einer Bewertungsskala mit Noten von 0-4. Die Noten hatten dabei die folgenden Bedeutungen:
0: abwesend
1: schwach
2: moderat
3: stark
4: sehr stark

In Tabelle 2 sind die Ergebnisse der Untersuchung zusammengefasst.

| | 8-(Z)-Tetradecenal | 8-(E)-Tetradecenal |
|---|---|---|
| Citrusartig | 4 | 1-2 |
| Fruchtig | 1 | 0 |
| Bluming | 2 | 0-1 |
| Nach Orangenschale | 4 | 0 |
| Nach Albedo | 4 | 1 |
| Süß | 3 | 1-2 |
| Fettig | 1 | 4 |
| Wachsig | 1-2 | 4 |
| Grün-krautig | 0 | 1 |
| Honigartig (Bienenwachs) . | 2 | 0 |
| Frisch, spritzig | 4 | 0 |
| Chemisch | 0-1 | 2-3 |

### Beispiel 3: Modifizierung einer üblichen Aromakomposition (Orangenaroma)

Eine übliche Aromenkomposition (Komposition A) wurde mit einer erfindungsgemäßen Aromenkomposition (Komposition B) verglichen. Wie sich aus der nachfolgenden Tabelle 4 ergibt, entsprach Komposition B der Komposition A weitgehend, aber Komposition B enthielt im Unterschied zu Komposition A einen Anteil von 0,005 Gew.-% (Z)-8-Tetradecenal (bezogen auf die Gesamtmasse der Komposition), was durch eine Verringerung des Anteils an Orangenöl ausgeglichen wurde.

**Tabelle 4:**

| Zusammensetzungen der Kompositionen A und B | | |
|---|---|---|
| Aromenkomposition Orange | A | B |
| Octanal | 0,3% | 0,3% |
| Linalool | 0,7% | 0,7% |
| Decanal | 0,4% | 0,4% |
| Citral | 0,1% | 0,1% |
| Dodecanal | 0.97% | 0,07% |
| Citronellal | 0,06% | 0,06% |
| Terpineol | 0,07% | 0,07% |
| Ethylbutyrat | 0,15% | 0,15% |
| Octanol | 0,05% | 0,05% |
| Acetaldehyd | 0,08% | 0,08% |
| Mandarinenöl | 0,15% | 0,15% |
| Citronenöl | 0,8% | 0,8% |
| Orangenöl | 97,07 | 97,065 |
| 8-(Z)-Tetradecenal | | 0,005% |

Das Aroma der erfindungsgemäßen Komposition B war im Vergleich mit dem Aroma der herkömmlichen Komposition A deutlich frischer, saftiger, voller und typischer.

### Beispiel 4: Synthese von (Z)-8-Tetradecenal

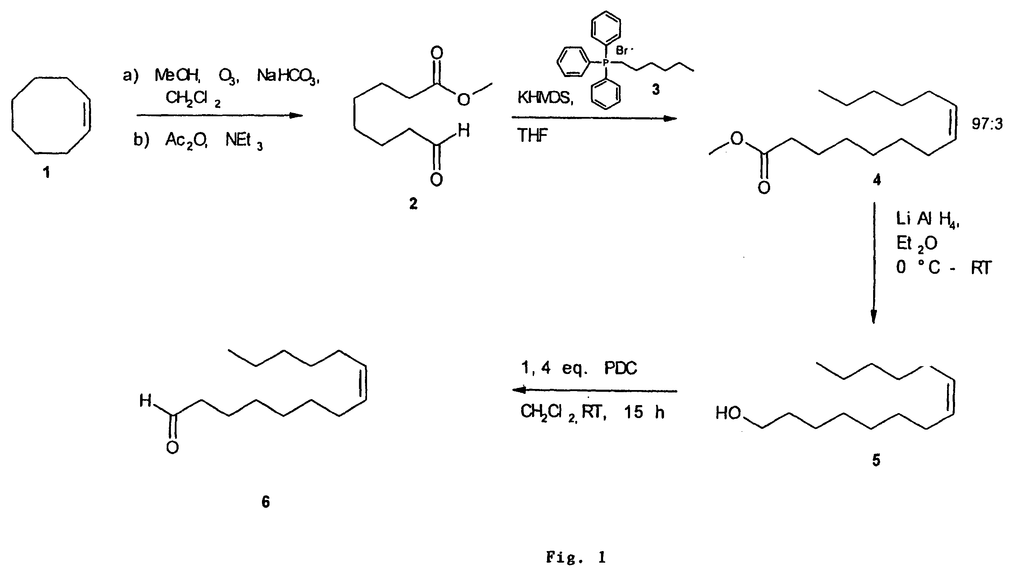

Die Synthese ist in Fig. 1 schematisch dargestellt.

(Z)-8-Tetradecenal (**6**) wurde in vier Sufen aus Cycloocten (**1**) dargestellt:
Ozonolyse von Cycloocten (**1**) und Aufarbeitung nach S.L. Schreiber et al (siehe unten) ergab 8-Oxooctansäuremethylester (**2**), der durch (Z)-selektive Wittigreaktion mit *n*-Hexyltriphenylphosphoniumbromid (**3**) zum (Z)-Tetradecenmethylester (**4**) umgesetzt wurde. Nach Reduktion von **4** mit Lithiumalanat zum Alkohol **5** und Oxidation mit PDC wurde (Z)-8-Tetradecenal (**6**) erhalten:

### 8-Oxooctansäuremethylester (2)

8-Oxooctansäuremethylester (**2**) wurde analog zu S.L. Schreiber, R. E. Claus, J. Regan, *Tetrahedron Letters* **1982**, *38*, 3867-3870 dargestellt:
48 g Cycloocten (**1**) und 8,4 g Natriumhydrogencarbonat wurden in 48 g Methanol und 1 l Dichlormethan bei -78 °C 5,5 h ozonolysiert. Man tropfte bei -60 C langsam 304 g Triethylamin zu und ließ über 1 h auf Raumtemperatur kommen. Es wurde mit Natriumthiosulfatlösung (10 %ig, 200 ml), 2 N HCl (150 ml), NaOH (5 %ig, 150 ml) und NaCl-Lsg. (ges., 200 ml) gewaschen, über Natriumsulfat getrocknet und das Lösungsmittel abdestilliert. Nach Destillation erhielt man 8-Oxooctansäuremethylester (**2**).

### (Z)-8-Tetradecensäuremethylester (4)

(Z)-8-Tetradecensäuremethylester (**4**) wurde analog zu J. Bestmann, W. Stransky, O. Vostrowsky, *Chem. Ber.* **1976**, *109*,1694-1700 und L. F. Tietze, Th. Eicher, *Reaktionen und Synthesen,* Georg Thieme Verlag Stuttgart, New York 1991, 192 synthetisiert:
82,5 g *n*-Hexylbromid und 131,2 g Triphenylphosphin wurden 35 h in 500 ml Toluol unter Rückfluß gekocht. Man destillierte ab, nahm in Dichlormethan auf und versetzte mit 1 l Diethylether. Kristallisation bei -15°C ergab *n*-Hexyltriphenylphosphoniumbromid (**3**).
29,35 g 3 und 150 ml Kalium-bis-(trimethylsilyl)-amid wurden in 120 ml THF (abs.) 1,5 h unter Schutzgas gekocht. Bei -78 °C wurden 12,91 g 8-Oxooctansäuremethylester (**2**) in 20 ml THF zugetropft und 2,5 h bei -78°C gerührt. Man ließ auf Raumtemperatur kommen, goß auf 150 ml Schwefelsäure (10 %ig) / 75 g Eis und extrahierte zweimal mit 150 ml Pentan. Die org. Phase wurde mit Natriumhydrogencarbonat-Lsg und NaCl-Lsg (ges.) gewaschen, über Natriumsulfat getrocknet und das Triphenylphosphinoxid bei -20 °C durch Kristallisation abgetrennt. Destillation im Hochvakuum ergab (Z)-8-Tetradecensäuremethylester (**4**) (Z/E-Verhältnis nach GC >97/3).

### (Z)-8-Tetradecen-1-ol (5)

(Z)-8-Tetradecen-1-ol (**5**) wurde analog zu K. Schwetlick et al., *Organikum,* 17. Aufl. VEB Verlag, Berlin 1988, S. 494-495 dargestellt:
0,95 g Lithiumaluminiumhydrid wurden unter Schutzgas in 150 ml Diethylether suspensiert und 10 g (Z)-8-Tetradecensäuremethylester (**4**) bei 0 °C zugetropft. Man rührte 0,5 h bei 0 °C und 5 h bei Raumtemperatur. Man versetzte mit je 1 ml Wasser und NaOH-Lsg. (15 %ig) und filtrierte über Kieselgel ab. Das Kieselgel wurde mit Ether gewaschen, die org. Phase über Natriumsulfat getrocknet und das Lösungsmittel abdestilliert. Man erhielt (Z)-8-Tetradecen-1-ol (**5**).

### (Z)-8-Tetradecenal (6)

(Z)-8-Tetradecenal (**6**) wurde analog zu E. J. Corey, G. Schmidt, *Tetrahedron Letters* **1979**, 399-402 dargestellt:
Unter Schutzgas wurden 15,8 g Pyridiniumdichromat in 300 ml Dichlormethan vorgelegt und unter Rühren mit 5,93 g (Z)-8-Tetradecen-1-ol (**5**) in 50 ml Dichlormethan versetzt. Man rührte 15 h bei Raumtemperatur und filtrierte über Kieselgel ab. Destillation im Hochvakuum ergab (Z)-8-Tetradecenal (**6**).
¹H-NMR (300 MHz, CDCl₃): δ = 0.89 (t, *J* = 7,0 Hz, 3 H), 1.23-1.40 (m, 12 H), 1.63 (quint, *J* = 7,5 Hz, 2 H), 1.95-2.05 (m, 4 H), 2.42 (dt, *J* = 1,8, 7,5 Hz, 2 H), 5.35 (m_{c}, 2 H), 9.77 (t, *J* = 1,38 Hz, 1 H).
¹³C-NMR (75 MHz, CDCl₃): δ = 14.09, 22.08, 22.61, 27.11, 27.21, 29.00, 29.09, 29.46, 29.53, 31.55, 43.90, 129.6, 130.1, 202.8.

### Beispiel 5: Synthese von (E)-8-Tetradecenal

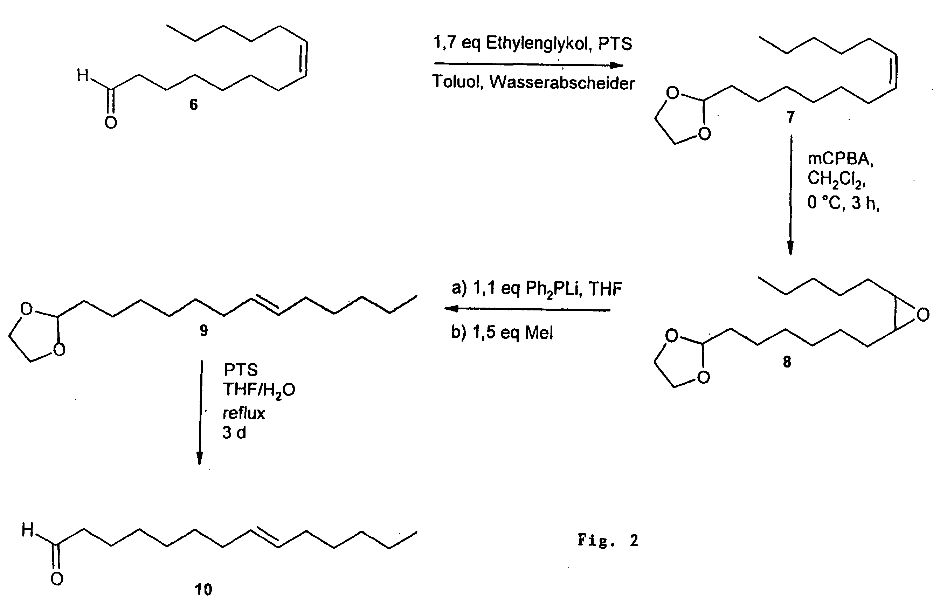

Die Synthese ist in Fig. 2 schematisch dargestellt.

(*E*)-8-Tetradecenal (**10**) wurde in 4 Stufen durch Inversion der Doppelbindungskonfiguration aus (Z)-8-Tetradecenal (**6**) zugänglich gemacht:
Schützung der Aldehydfunktionalität als Dioxolan (**7**), Epoxidierung mit m-Chlorperbenzoesäure zum Oxiran (**8**), nukleophile Epoxidöffnung unter Inversion der ursprünglichen Doppelbindungsgeometrie nach Vedejs zum (*E*)-Alken (**9**) und säurekatalysierte Entschützung des Acetals zur Zielverbindung (*E*)-8-Tetradecenal (**10**).

### 2-[(Z)-Tridec-7-enyl]-1,3-dioxolan (7)

2-[(Z)-Tridec-7-enyl]-1,3-dioxolan (**7**) wurde analog K. Schwetlick et al., *Organikum,* 17. Aufl. VEB Verlag, Berlin 1988, 398 dargestellt:
5,6 g (Z)-8-Tetradecenal (**6**), 2,0 g Ethylenglycol und 20 mg *p*-Toluolsulfonsäure in 150 ml Toluol wurden 3 h am Wasserabscheider gekocht. Man wusch mit Natriumhydrogensulfat-Lsg., trocknete über Natriumsulfat und destillierte das Lösungsmittel ab. Chromatographie an Kieselgel ergab 2-[(Z)-Tridec-7-enyl]-1,3-dioxolan (**7**).

### 2-[(7R,8S/7S,8R)-Epoxy-tridecanyl]-1,3-dioxolan (8)

Epoxidierung mit MCPBA allgemein: D. Swem, Organic Peroxides, Vol. 2, Wiley-Interscience, New York 1971, 355-533.
3,75 g 2-[(Z)-Tridec-7-enyl]-1,3-dioxolan (**7**) wurden in 50 ml Dichlormethan vorgelegt und portionsweise bei 0 °C mit 5,44 g *m*-Chlorperbenzoesäure (70 %ig) versetzt. Man rührte 3 h bei 0 °C, verdünnte mit 50 ml Dichlormethan und wusch mit Natriumcarbonat-Lsg. (10 %ig, 2 * 30 ml) und NaCl-Lsg. (ges., 30 ml). Es wurde über Natriumsulfat getrocknet und das Lösungsmittel abdestilliert. Man erhielt 2-[(7R,8S/7S,8R)-Epoxy-tridecanyl]-1,3-dioxolan (**8**).

### 2-[(E)Tridec-7-enyl]-1,3-dioxolan (9)

2-[(*E*)Tridec-7-enyl]-1;3-dioxolan (**9**) wurde analog zu E. Vedejs, P. L. Fuchs, *J. Am. Chem. Soc* **1973**, *95*, 822-825 dargestellt:
Lithium-diphenylphosphid, -0,9 M in THF: 11,0 g Chlordiphenylphosphin wurden unter Schutzgas zu 0,76 g Lithiumdraht in 50 ml trockenem THF getropft. Man ließ einen Tag bei Raumtemperatur rühren.
2-[(*E*)Tridec-7-enyl]-1,3-dioxolan (**9**): 13,3 ml Lithiumdiphenylphosphid (-0,9 M in THF) wurden in 30 ml THF (abs.) vorgelegt und 2,70 g 2-[(*7R,8S*/*7S,8R*)-Epoxytridecanyl]-1,3-dioxolan (**8**) in 10 ml THF bei Raumtemperatur zugetropft. Man rührte 2,5 h, versetzte mit 0,94 ml Methyljodid und rührte 1 h. Es wurde mit 20 ml Wasser 30 min gequencht und mit 500 ml Diethylether extrahiert. Man wusch mit NaCl-Lsg. (ges.), trocknete über Natriumsulfat und destillierte das Lösungsmittel ab. Triphenylphosphinoxid wurde durch Kristallisation mit Pentan bei -18°C abgetrennt. Destillation im Hochvakuum ergab 2-[(E)Tridec-7-enyl]-1,3-dioxolan (**9**).

### (E)-8-Tetradecenal (10)

Entschützung eines Ethlenglycolacetals durch saure Hydrolyse nach P. J. Kocienski, *Protecting Groups,* Georg Thieme Verlag Stuttgart, New York 1994, 157-163:
Unter Schutzgas kochte man 0,89 g 2-[(*E*)Tridec-7-enyl] -1,3-dioxolan (**9**), 30 mg *p*-Toluolsulfonsäure und 25 ml Wasser in 75 ml Methanol 72 h unter Rückfluß (86 % Umsatz). Man extrahierte 2 mal-mit 200 ml Diethylether, wusch mit 30 ml Natriumhydrogencarbonat-Lsg., trocknete über Natriumsulfat und destillierte das Lösungsmittel im Vakuum ab. Flash-Chromatographie an Kieselgel ergab (*E*)-8-Tetradecenal (**10**) (E/Z-Verhältnis nach GC >97/3).
¹H-NMR (300 MHz, CDCl₃): δ = 0,88 (t, *J* = 6,9 Hz, 3 H), 1,23-1,40 (m, 12 H), 1,63 (quint, *J* = 7,2 Hz, 2 H), 1,93-2,03 (m, 4 H), 2,42 (dt, *J* = 1,8, 7,3 Hz, 2 H), 5,35 (m_{c}, 2 H), 9,76 (t, *J* = 1,8 Hz, 1 H).
¹³C-NMR (75 MHz, CDCl₃): δ = 14.09, 22.07, 22.57, 28.83, 29.04, 29.35, 29.39, 31.42, 32.49, 32.59, 43.91, 130.0, 130.6, 202.8.

## Patentansprüche

1. Verwendung von (Z)-8-Tetradecenal, (E)-8-Tetradecenal oder einem Gemisch aus (Z)-8- und (E)-8-Tetradecenal als Duft- oder Aromastoff.

2. Verfahren zur Vermittlung oder Verstärkung eines Citrusduftes oder Citrusaromas einer Grundkomposition, **dadurch gekennzeichnet, dass**
(a) eine sensorisch wirksame Menge an (Z)-8-Tetradecenal, (E)-8-Tetradecenal oder einem Gemisch aus (Z)-8- und (E)-8-Tetradecenal und
(b) Bestandteile der Grundkomposition vermischt werden.

3. Verfahren zum Modifizieren einer Duftstoff- oder Aromakomposition, wobei zu der Duftstoff- oder Aromakomposition eine den Duft oder das Aroma modifizierende Menge an (Z)-8-Tetradecenal, (E)-8-Tetradecenal oder einem Gemisch aus (Z)-8- und (E)-8-Tetradecenal zugesetzt wird.

4. Aromakomposition, umfassend eine sensorisch aktive Menge an (Z)-8-Tetradecenal, (E)-8-Tetradecenal oder einem Gemisch aus (Z)-8-und (E)-8-Tetradecenal, **dadurch gekennzeichnet, dass** sie einen Anteil von 0,001 bis 1 Gew.-% (Z)-8-Tetradecenal umfasst, bezogen auf die Gesamtmasse der Komposition.

5. Aromakomposition nach Anspruch 4, **dadurch gekennzeichnet, dass** sie einen Anteil von 0,001 bis 0,1 Gew.-% (Z)-8-Tetradecenal umfasst, bezogen auf die Gesamtmasse der Komposition.

6. Aromakomposition nach einem der Ansprüche 4-5, **dadurch gekennzeichnet, dass** die Komposition eine Citrusfrucht-Komposition ist.

7. Artikel, umfassend einen Anteil von 0.0001 bis 1 Gew.-%, vorzugweise 0,001 bis 0,1 Gew.-%, bezogen auf die Gesamtmasse des Artikels, einer Duftstoff- oder Aromakomposition mit einem Anteil von 0,001 bis 0,1 Gew.-% (Z)-8-Tetradecenal, bezogen auf die Gesamtmasse der komposition, wobei der Artikel ein Körperpflegeproduckt, ein Reinigungsmittel oder ein Nahrungsmittel ist.

8. Artikel, umfassend einen Anteil von 1 ppb bis 100 ppm (Z)-8-Tetradecenal, bezogen auf die Gesamtmasse des Artikels, wobei der Artikel ein Körperpflegeproduckt, ein Reinigungsmittel oder ein Nahrungsmittel ist.

## Claims

1. Use of (Z)-8-tetradecenal, (E)-8-tetradecenal or a mixture of (Z)-8- and (E)-8-tetradecenal as a perfume or flavouring agent.

2. Method for imparting a citrus perfume or citrus flavour to or for intensifying a citrus perfume or citrus flavour of a base composition, **characterised in that**
(a) an amount of (Z)-8-tetradecenal, (E)-8-tetradecenal or of a mixture of (Z)-8- and (E)-8-tetradecenal that is effective in sensory terms and
(b) constituents of the base composition are mixed.

3. Method for modifying a perfume or flavour composition, wherein an amount of (Z)-8-tetradecenal, (E)-8-tetradecenal or of a mixture of (Z)-8- and (E)-8-tetradecenal which modifies the perfume or the flavour is added to the perfume or flavour composition.

4. Flavour composition comprising an amount of (Z)-8-tetradecenal, (E)-8-tetradecenal or a mixture of (Z)-8- and (E)-8-tetradecenal that is active in sensory terms, **characterised in that** it contains a proportion of 0.001 to 1 wt.% of (Z)-8-tetradecenal relative to the total mass of the composition.

5. Flavour composition according to claim 4, **characterised in that** it contains a proportion of 0.001 to 0.1 wt.% of (Z)-8-tetradecenal relative to the total mass of the composition.

6. Flavour composition according to one of claims 4 to 5, **characterised in that** the composition is a citrus fruit composition.

7. Article containing a proportion of 0.0001 to 1 wt.%, preferably 0.001 to 0.1 wt.%, relative to the total mass of the article, of a perfume or flavour composition with a proportion of 0.001 to 0.1 wt.% of (Z)-8-tetradecenal, relative to the total mass of the composition, wherein
the article is a personal care product, a cleaning agent or a food.

8. Article containing a proportion of 1 ppb to 100 ppm of (Z)-8-tetradecenal, relative to the total mass of the article, wherein
the article is a personal care product, a cleaning agent or a food.

## Revendications

1. Utilisation de (Z)-8-tétradécénal, de (E)-8-tétradécénal ou d'un mélange de (Z)-8- et de (E)-8-tétradécénal, comme substance odoriférante ou aromatique.

2. Procédé pour intervenir au niveau de ou renforcer un parfum de citron ou un arôme de citron d'une composition de base, **caractérisé en ce que** l'on mélange
(a) une quantité active de manière sensorielle de (Z)-8-tétradécénal, de (E)-8-tétradécénal ou d'un mélange de (Z)-8- et de (E)-8-tétradécénal, et
(b) les constituants de la composition de base.

3. Procédé pour modifier une composition odoriférante ou aromatique, où l'on ajoute à la composition odoriférante ou aromatique, une quantité modifiant l'odeur ou l'arôme de (Z)-8-tétradécénal, de (E)-8-tétradécénal ou d'un mélange de (Z)-8- et de (E)-8-tétradécénal.

4. Composition aromatique, comprenant une quantité active de manière sensorielle de (Z)-8-tétradécénal, de (E)-8-tétradécénal ou d'un mélange de (Z)-8- et de (E)-8-tétradécénal, **caractérisée en ce qu'**elle comprend une proportion de 0,001 à 1% en poids de (Z)-8-tétradécénal, sur la base de la masse totale de la composition.

5. Composition aromatique selon la revendication 4, **caractérisée en ce qu'**elle comprend une proportion de 0,001 à 0,1% en poids de (Z)-8-tétradécénal, sur la base de la masse totale de la composition.

6. Composition aromatique selon l'une des revendications 4-5, **caractérisée en ce que** la composition est une composition de citron.

7. Article, comprenant une proportion de 0,0001 à 1% en poids, de préférence de 0,001 à 0,1% en poids, sur base de la masse totale de l'article, d'une composition odoriférante ou aromatique avec une proportion de 0,001 à 0,1% en poids de (Z)-8-tétradécénal, sur la base de la masse totale de la composition, où l'article est un produit de soin du corps, un agent de nettoyage ou un produit alimentaire.

8. Article, comprenant une proportion de 1 ppb à 100 ppm de (Z)-8-tétradécénal, sur la base de la masse totale de l'article, où l'article est un produit de soin du corps, un agent de nettoyage ou un produit alimentaire.
